# EUROPEAN PATENT SPECIFICATION

(11) **EP 3 121 554 B1**
(45) Date of publication and mention of the grant of the patent: **17.01.2018**
(21) Application number: 16182629.2
(22) Date of filing: 20.07.2010
(51) Int. Cl.: G01B 5/00, G01D 5/347, G01B 3/00

(54) **OPTOELECTRONIC MEASURING DEVICE WITH A PLURALITY OF CARRIER BODIES AND METHOD FOR ALIGNING SAID CARRIER BODIES**
OPTOELEKTRONISCHE MESSVORRICHTUNG MIT MEHREREN TRÄGERKÖRPERN UND VERFAHREN ZUR AUSRICHTUNG DIESER TRÄGERKÖRPER
DISPOSITIF DE MESURE OPTOÉLECTRONIQUE DOTÉ D'UNE PLURALITÉ DE CORPS DE SUPPORT ET PROCÉDÉ D'ALIGNEMENT DESDITS CORPS DE SUPPORT

(43) Date of publication of application: 25.01.2017
(62) Divisional of application: 10382203.7
(73) Proprietor: Fagor, S. Coop., 20500 Arrasate-Mondragon (ES)
(72) Inventor: ZUNZUNEGI MUGICA, José Javier, 20550 ARETXABALETA (ES); DELGADO JIMÉNEZ, Juan Carlos, 20500 MONDRAGON (ES)
(74) Representative: Igartua, Ismael

(56) References cited:
- CN-A- 1 749 585
- US-A- 4 160 328
- US-A- 5 253 430

## Description

### TECHNICAL FIELD

This invention relates to optoelectronic measuring devices that comprise a plurality of carrier bodies, and to methods for aligning said carrier bodies.

### PRIOR ART

Optoelectronic measuring devices adapted for measuring longitudinal movements comprise, generally, a substantially hollow carrier body, a scale arranged inside the carrier body, and a read head that faces the scale and which moves longitudinally in relation to said scale in one or another direction, running on an inner surface of said carrier body. Examples of devices of this type are disclosed, for example, in documents US5016359 and US20020124665.

One very common method of joining these types of devices to a machine where they are to be used is to join the carrier body directly to a bench or work bench of said machine by means such as screws, as disclosed in document US5375338 for example.

If the carrier body to be used comprises a very sizeable length, it is very difficult to handle and/or transport, and as a result of this it is sometimes useful to divide the carrier body into two or more parts. These parts may be fixed directly to the bench or work bench of a machine, one after the other, in such a way that all the parts are aligned and the scale may be correctly arranged. The various parts are aligned taking into account an outer surface of said parts, although, due to the manufacturing tolerances, for example, the various parts may comprise different thicknesses, so that the ensuring of a correct alignment between the outer surfaces does not ensure a correct alignment between the inner surfaces of the various parts, a correct movement of the read head thereby not being guaranteed.

US5253430A1 discloses a tubular protective carrier housing for a length measuring system encased in the carrier housing, the housing having a longitudinal axis and being divided into a center part and two end parts. Said parts have ends facing each other and are connected by interdigitating and overlapping flanges, said parts being then shaped to match each other.

### BRIEF DISCLOSURE OF THE INVENTION

The present invention relates to an optoelectronic measuring device and to a method for aligning carrier bodies for an optoelectronic measuring device as set forth in the appended claims. It is an object of the invention to provide an optoelectronic measuring device with a plurality of carrier bodies, where, at least to a large extent, a correct alignment between inner surfaces of said carrier bodies is ensured, thereby enabling a correct movement of a read head that runs on said inner surfaces, and a method for carrying out said alignment.

The device of the invention comprises at least two carrier bodies joined to each other and a read head that may move longitudinally in relation to said carrier bodies. Each carrier body comprises a longitudinal inner surface on which the read head runs when it moves.

The device also comprises at least one additional element attached to each carrier body, each additional element comprising a specific reference and each additional element being attached to the corresponding carrier body, with the result that a specific reference distance between said reference and the inner surface of the corresponding carrier body is equal for all the carrier bodies and the corresponding additional elements. The references of the various carrier bodies are aligned with each other, so that, as the reference distances are substantially equal in all cases, the inner surfaces of the various carrier bodies are aligned and a correct movement of the read head on them is enabled, even in movements from one carrier body to another.

The device comprises a first additional element fixed to a lateral face of a first carrier body and a second additional element fixed to a lateral face of a carrier body that is joined to the first carrier body, said additional elements cooperating with each other to join both carrier bodies. The second additional element comprises a housing with a longitudinal central axis, and the first additional element comprises a projection with a longitudinal axis that is housed in the housing of said second additional element, the axis being aligned each other and axis being also the reference arranged at a reference distance in relation to the inner surface of the corresponding carrier body.

As a result, rather than an outer surface of the carrier body acting as a reference surface between the various carrier bodies for their alignment, it is the additional elements that are used as a reference to align said carrier bodies, a correct alignment between the inner surfaces of the various carrier bodies being obtained in a comfortable, simple and inexpensive manner, and more accurately than in the prior art.

These and other advantages and characteristics of the invention will be made evident in the light of the drawings and the detailed description thereof.

### DESCRIPTION OF THE DRAWINGS

Figure 1 shows a view in perspective of an embodiment of the optoelectronic measuring device of the invention comprising a plurality of carrier bodies.
Figure 2 shows a view in perspective of a carrier body of an embodiment of the optoelectronic measuring device of the invention.
Figure 3 shows a view in perspective of a carrier body designed to cooperate with the carrier body of Figure 2.

### DETAILED DISCLOSURE OF THE INVENTION

One aspect of the invention refers to an optoelectronic measuring device 100. The optoelectronic measuring device 100 comprises a band or scale 2 and a read head 1 that faces the scale 2 and which moves longitudinally on said scale 2, measuring the lengths in accordance with the movement of said read head 1. The length of the scale 2 depends on the total length to be measured, and on the requirements of the manufacturer and/or the end user.

The scale 2 is arranged inside a carrier body 3 to insulate it from the exterior and prevent, as far as is possible, dirt from settling on it, which would lead to measurement errors. The measurement of sizeable lengths involves the use of a scale 2 with an extensive length, which requires a carrier body 3 of considerable length. Carrier bodies 3 of a considerable length are difficult to transport and handle, as a result of which when its required length is sizeable, instead of just one a plurality of carrier bodies 3 is preferably used in order to make up the required length. The device 100 of the invention is designed for the use of two or more carrier bodies 3.

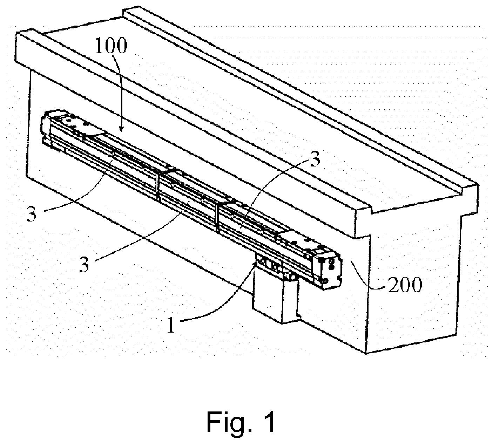

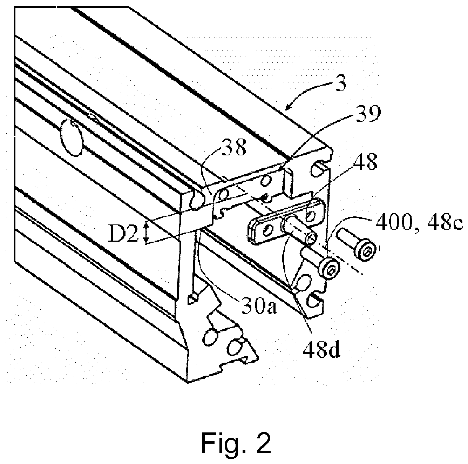

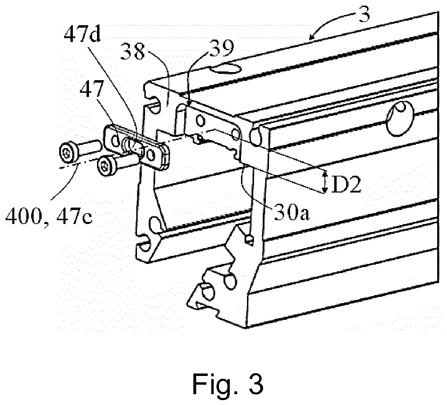

In the embodiment of the device 100 shown in Figure 1, said device 100 comprises three carrier bodies 3 by way of example, although it may comprise more carrier bodies 3 depending on their total length and/or the requirements of the manufacturer and/or the end user, or even only two carrier bodies 3. The carrier bodies 3 are substantially U-shaped, as shown in more detail in Figures 2 and 3, for example, with a base 30 and two walls 31 and 32 that are substantially vertical and facing each other, and the scale 2 of the device 100 is arranged inside the carrier bodies 3. The read head 1 is designed to move longitudinally on the scale 2 inside, running on an inner surface 30a of said carrier bodies 3. The object of the device 100 of the invention is to align correctly and in a simple manner the inner surfaces 30a of the various carrier bodies 3, so that the read head 1 moves without jumping due to misalignments between said carrier bodies 3, which can result in erroneous measurements and/or in the premature breakage of said read head 1.

The device 100 comprises at least one additional element 47, 48 for each carrier body 3, associated or referenced to the inner surface 30a of the corresponding carrier body 3, the additional elements 47, 48 of the various carrier bodies 3 taking part between them when said carrier bodies 3 are joined together, so that the different inner surfaces 30a of said carrier bodies 3 are correctly aligned. Each additional element 47, 48 comprises a reference and is associated to the corresponding carrier body 3 with the result that a specific reference distance D2 between said reference 400 and the inner surface 30a of the corresponding carrier body 3 is equal for all the carrier bodies 3 and their corresponding additional elements 47, 48. The different references 400 are aligned with each other, so that the inner surfaces 30a of the various carrier bodies 3 are aligned.

The thickness 30c of the base 30, delimited between the inner surface 30a and an outer surface 30b, is not always the same due to the process of manufacture of the carrier body 3, which is usually manufactured in an extrusion process and which enables tolerances for said thickness 30c, so that when the carrier bodies 3 are fixed to a structure 200 of a machine (and when they are joined together), if the outer surfaces 30b are taken as a reference for aligning the carrier bodies 3 there is no guarantee that the inner surfaces 30a of the various carrier bodies 3 will be perfectly aligned. In the preferred embodiment of the device 100 of the invention it is not the outer surface 30b that is taken as a reference. Rather it is the additional elements 4 that are taken as a reference for fixing said carrier bodies 3 to the structure 200.

The device 100 of the invention comprises at least two carrier bodies joined to and aligned with each other by means of an additional element 47, 48 arranged on each carrier body 3, said additional elements 47 and 48 cooperating with each other. One of the carrier bodies 3 comprises a first additional element 48 fixed to one of its lateral faces 38, and another of the carrier bodies 3 comprises a second additional element 47 fixed to one of its lateral faces 38 that faces the lateral face 38 that comprises the first additional element 48 of the other carrier body 3. The second additional element 47 comprises a housing 47d with a longitudinal central axis 47c, and the first additional element 48 comprises a projection 48d with a longitudinal axis 48c that is housed in the housing 47d of said second additional element 47. The central axis 47c and the longitudinal axis 48c correspond in each case with the reference 400 of the respective additional elements 47 and 48, said additional elements 47 and 48 being fixed to the carrier bodies 3 so that said reference 400 is arranged at a reference distance D2 in relation to the inner surface 30a of the corresponding carrier body 3. As a result, the additional elements 47 and 48 cooperate in the alignment of the inner surfaces 30a of the various carrier bodies 3. Each carrier body 3 preferably comprises a slot 39 on its lateral face 38, where the corresponding additional element 47, 48 is arranged.

Other aspect of the invention refers to a method for aligning carrier bodies 3 for an optoelectronic measuring device 100, said device 100 comprising at least two carrier bodies 3 and each carrier body 3 comprising an inner surface 30a on which a read head 1 runs. At least one additional element 47, 48 is joined to each carrier body 3, so that a reference 400 of said additional element 47, 48 is at a specific reference distance D2 in relation to the inner surface 30a of the corresponding carrier body 3, the reference distances D2 being substantially equal for all the additional elements 47, 48 and the corresponding carrier bodies 3 of a device 100. The carrier bodies 3 are joined to each other, the references 400 of said carrier bodies 3 being aligned with each other, so that the inner surfaces 30a of said carrier bodies 3 are also aligned.

The method also comprises determining a reference distance D2 in relation to the inner surface 30a for each additional element 47, 48, attaching the additional element 47, 48 to a lateral face 38 of the corresponding carrier body 3, and arranging the reference 400 at said specific reference distance D2 in relation to the inner surface 30a of said carrier body 3,

A first additional element 48 is fixed to a lateral face 38 of a first carrier body 3, and a second additional element 47 is fixed to a lateral face 38 of a carrier body 3 adjacent to the first carrier body 3, said both faces 38 being faced. The second additional element 47 comprises a housing 47d with a central axis 47c, and the first additional element 48 comprises a projection 48d with a longitudinal axis 48c, and said axis 47d and 48d are the reference 400 being arranged at the reference distance D2 in relation to the inner surface 30a of the corresponding carrier body 3. Both additional elements 47 and 48 cooperate with each other when joining said carrier bodies 3 to each other, the projection 48d of the first additional element 48 being housed in the housing 47d of the second additional element faced to it.

## Claims

1. Optoelectronic measuring device comprising at least two carrier bodies (3) joined to each other, a scale (2) arranged inside the carrier bodies (3), and a read head (1) that faces the scale (2) and that is movable longitudinally in relation to the carrier bodies (3), each carrier body (3) comprising a longitudinal inner surface (30a) on which the read head (1) runs when it moves, each carrier body (3) comprising an outer surface (30b) substantially parallel to the inner surface (30a), there being defined between the inner and outer surfaces (30a, 30b) a thickness (30c) of said carrier body (3), where the device (100) also comprises at least one additional element (47, 48) joined to each carrier body (3) that is used as a reference to align the carrier bodies (3) with each other, **characterised in that** each additional element (47, 48) comprises a reference (400) arranged at a determined reference distance (D2) in relation to the inner surface (30a) of the corresponding carrier body (3), the reference distances (D2) being equal for all the carrier bodies (3) and their corresponding references (400), the references (400) being aligned with each other, so that the inner surfaces (30a) of the various carrier bodies (3) are aligned, the device (100) comprising a first additional element (48) fixed to a lateral face (38) of a first carrier body (3) and a second additional element (47) fixed to a lateral face (38) of a carrier body (3) that is joined to the first carrier body (3), said additional elements (47, 48) cooperating with each other to join both carrier bodies (3), the second additional element (47) comprising a housing (47d) with a longitudinal central axis (47c) and the first additional element (48) comprising a projection (48d) with a longitudinal axis (48c) that is housed in the housing (47d) of said second additional element (47), the axis (47d, 48d) being aligned, said axis (47d, 48d) corresponding with the reference (400) arranged at a reference distance (D2) in relation to the inner surface (30a) of the corresponding carrier body (3).

2. Device according to claim 1, wherein the carrier body (3) comprises a slot (39) on its lateral face (38), where the additional element (47, 48) is arranged.

3. Method for aligning carrier bodies for an optoelectronic measuring device that comprises at least two carrier bodies (3), each carrier body (3) comprising an inner surface (30a) on which a read head (1) runs, wherein at least one additional element (47, 48) is joined to each carrier body (3), so that a reference (400) of said additional element (47, 48) is at a specific reference distance (D2) in relation to the inner surface (30a) of the corresponding carrier body (3), the reference distances (D2) being substantially equal for all the additional elements (47, 48) and the corresponding carrier bodies (3), and the carrier bodies (3) are joined, the references (400) of said carrier bodies (3) being aligned with each other, so that the inner surfaces (30a) of said carrier bodies (3) are also aligned, the method also comprising determining a reference distance (D2) in relation to the inner surface (30a) for each additional element (47, 48), attaching the additional element (47, 48) to a lateral face (38) of the corresponding carrier body (3), and arranging the reference (400) at said specific reference distance (D2) in relation to the inner surface (30a) of said carrier body (3), a first additional element (48) being fixed to a lateral face (38) of a first carrier body (3) and a second additional element (47) to a lateral face (38) of a carrier body (3) adjacent to the first carrier body (3) and facing the lateral face (38) of the other carrier body (3) comprising the first additional element (48), the second additional element (47) comprising a housing (47d) with a central axis (47c) and the first additional element (48) comprising a projection (48d) with a longitudinal axis (48c), and said axis (47d, 48d) being the reference (400) that is arranged at the reference distance (D2) in relation to the inner surface (30a) of the corresponding carrier body (3), and both carrier bodies (3) being joined to each other, both additional elements (47, 48) cooperating with each other when joining said carrier bodies (3) to each other, the projection (48d) of the first additional element (48) of a carrier body (3) being housed in the housing (47d) of the second additional element (47) of an adjacent carrier body (3), when joining said carrier bodies (3) to each other.

## Patentansprüche

1. Optoelektronische Messvorrichtung mit mindestens zwei miteinander verbundenen Trägerkörpern (3), einer innerhalb der Trägerkörper (3) angeordneten Skala (2) und einem der Skala (2) zugewandten und in Längsrichtung in Bezug auf die Trägerkörper (3) bewegbaren Lesekopf (1), wobei jeder Trägerkörper (3) eine Längsinnenfläche (30a) umfasst, auf der der Lesekopf (1) läuft, wenn er sich bewegt, wobei jeder Trägerkörper (3) eine im Wesentlichen parallel zu der Innenfläche (30a) verlaufende Außenfläche (30b) umfasst, wobei zwischen der Innen- und der Außenfläche (30a, 30b) eine Dicke (30c) des Trägerkörpers (3) definiert ist, wobei die Vorrichtung (100) auch mindestens ein mit jedem Trägerkörper (3) verbundenes Zusatzelement (47, 48) umfasst, das als Referenz dient, um die Trägerkörper (3) miteinander auszurichten, **dadurch gekennzeichnet, dass** jedes Zusatzelement (47, 48) eine Referenz (400) umfasst, die in einem bestimmten Referenzabstand (D2) in Bezug auf die Innenfläche (30a) des entsprechenden Trägerkörpers (3) angeordnet ist, wobei die Referenzabstände (D2) für alle Trägerkörper (3) und ihre entsprechenden Referenzen (400) gleich sind, wobei die Referenzen (400) so miteinander ausgerichtet sind, dass die Innenflächen (30a) der verschiedenen Trägerkörper (3) ausgerichtet sind, wobei die Vorrichtung (100) ein an einer Seitenfläche (38) eines ersten Trägerkörpers (3) befestigtes erstes Zusatzelement (48) und ein an einer Seitenfläche (38) eines Trägerkörpers (3), der mit dem ersten Trägerkörper (3) verbunden ist, befestigtes zweites Zusatzelement (47) umfasst, wobei die Zusatzelemente (47, 48) zusammenwirken, um beide Trägerkörper (3) miteinander zu verbinden, wobei das zweite Zusatzelement (47) ein Gehäuse (47d) mit einer Längsmittelachse (47c) umfasst und das erste Zusatzelement (48) einen Vorsprung (48d) mit einer Längsachse (48c) umfasst, der in dem Gehäuse (47d) des zweiten Zusatzelements (47) untergebracht ist, wobei die Achse (47d, 48d) ausgerichtet ist, wobei die Achse (47d, 48d) der Referenz (400) entspricht, die in einem Referenzabstand (D2) in Bezug auf die Innenfläche (30a) des entsprechenden Trägerkörpers (3) angeordnet ist.

2. Vorrichtung nach Anspruch 1, wobei der Trägerkörper (3) an seiner Seitenfläche (38) einen Schlitz (39) aufweist, an dem das Zusatzelement (47, 48) angeordnet ist.

3. Verfahren zum Ausrichten von Trägerkörpern für eine optoelektronische Messvorrichtung, die mindestens zwei Trägerkörper (3) umfasst, wobei jeder Trägerkörper (3) eine Innenfläche (30a) umfasst, auf der ein Lesekopf (1) läuft, wobei mindestens ein Zusatzelement (47, 48) mit jedem Trägerkörper (3) verbunden ist, sodass sich eine Referenz (400) des Zusatzelements (47, 48) in einem bestimmten Referenzabstand (D2) in Bezug auf die Innenfläche (30a) des entsprechenden Trägerkörpers (3) befindet, wobei die Referenzabstände (D2) für alle Zusatzelemente (47, 48) und die entsprechenden Trägerkörper (3) im Wesentlichen gleich sind und die Trägerkörper (3) verbunden sind, wobei die Referenzen (400) der Trägerkörper (3) miteinander ausgerichtet sind, sodass auch die Innenflächen (30a) der Trägerkörper (3) ausgerichtet sind, wobei das Verfahren auch das Bestimmen eines Referenzabstandes (D2) in Bezug auf die Innenfläche (30a) für jedes Zusatzelement (47,48), das Befestigen des Zusatzelements (47, 48) an einer Seitenfläche (38) des entsprechenden Trägerkörpers (3) und das Anordnen der Referenz (400) in dem bestimmten Referenzabstand (D2) in Bezug auf die Innenfläche (30a) des Trägerkörpers (3) umfasst, wobei ein erstes Zusatzelement (48) an einer Seitenfläche (38) eines ersten Trägerkörpers (3) und ein zweites Zusatzelement (47) an einer dem ersten Trägerkörper (3) benachbarten Seitenfläche (38) eines Trägerkörpers (3) befestigt und der Seitenfläche (38) des anderen Trägerkörpers (3) zugewandt ist, der das erste Zusatzelement (48) umfasst, wobei das zweite Zusatzelement (47) ein Gehäuse (47d) mit einer Mittelachse (47c) und das erste Zusatzelement (48) einen Vorsprung (48d) mit einer Längsachse (48c) umfasst, und wobei die Achse (47d, 48d) die Referenz (400) ist, die in dem Referenzabstand (D2) in Bezug auf die Innenfläche (30a) des entsprechenden Trägerkörpers (3) angeordnet ist und wobei beide Trägerkörper (3) miteinander verbunden sind, wobei beide Zusatzelemente (47, 48) zusammenwirken, wenn die Trägerkörper (3) miteinander verbunden werden, wobei der Vorsprung (48d) des ersten Zusatzelements (48) eines Trägerkörpers (3) in dem Gehäuse (47d) des zweiten Zusatzelements (47) eines benachbarten Trägerkörpers (3), wenn die Trägerkörper (3) miteinander verbunden werden, untergebracht ist.

## Revendications

1. Dispositif de mesure optoélectronique comprenant au moins deux corps de support (3) reliés les uns aux autres, une bascule (2) agencée à l'intérieur des corps de support (3), et une tête de lecture (1) qui fait face à la bascule (2) et qui est mobile longitudinalement par rapport aux corps de support (3), chaque corps de support (3) comprenant une surface interne longitudinale (30a) sur laquelle circule la tête de lecture (1) lorsqu'elle se déplace, chaque corps de support (3) comprenant une surface externe (30b) pratiquement parallèle à la surface interne (30a), entre les surfaces interne et externe (30a, 30b) étant définie une épaisseur (30c) dudit corps de support (3), le dispositif (100) comprenant également au moins un élément supplémentaire (47, 48) relié à chaque corps de support (3) qui est utilisé comme référence pour aligner les corps de support (3) les uns aux autres, **caractérisé en ce que** chaque élément supplémentaire (47, 48) comprend une référence (400) agencée à une distance de référence déterminée (D2) par rapport à la surface interne (30a) du corps de support correspondant (3), les distances de référence (D2) étant égales pour l'ensemble des corps de support (3) et leurs références correspondantes (400), les références (400) étant alignées les unes avec les autres, de sorte que les surfaces internes (30a) des divers corps de support (3) soient alignées, le dispositif (100) comprenant un premier élément supplémentaire (48) fixé à une face latérale (38) d'un premier corps de support (3) et un second élément supplémentaire (47) fixé à une face latérale (38) d'un corps de support (3) qui est relié au premier corps de support (3), lesdits éléments supplémentaires (47, 48) coopérant l'un avec l'autre pour relier les deux corps de support (3), le second élément supplémentaire (47) comprenant un logement (47d) présentant un axe central longitudinal (47c) et le premier élément supplémentaire (48) comprenant une saillie (48d) présentant un axe longitudinal (48c) qui est logée dans le logement (47d) dudit second élément supplémentaire (47), les axes (47d, 48d) étant alignés, lesdits axes (47d, 48d) correspondant à la référence (400) agencée à une distance de référence (D2) par rapport à la surface interne (30a) du corps de support correspondant (3).

2. Dispositif selon la revendication 1, dans lequel le corps de support (3) comprend une fente (39) sur sa face latérale (38), dans laquelle est agencé l'élément supplémentaire (47, 48).

3. Procédé d'alignement de corps de support pour un dispositif de mesure optoélectronique qui comprend au moins deux corps de support (3), chaque corps de support (3) comprenant une surface interne (30a) sur laquelle circule une tête de lecture (1), dans lequel au moins un élément supplémentaire (47, 48) est relié à chaque corps de support (3), de sorte qu'une référence (400) dudit élément supplémentaire (47, 48) se trouve à une distance de référence (D2) spécifique par rapport à la surface interne (30a) du corps de support correspondant (3), les distances de référence (D2) étant pratiquement égales pour l'ensemble des éléments supplémentaires (47, 48) et des corps de support correspondants (3), et les corps de support (3) sont reliés, les références (400) desdits corps de support (3) étant alignées les unes avec les autres, de sorte que les surfaces internes (30a) desdits corps de support (3) sont également alignées, le procédé consistant également à déterminer une distance de référence (D2) par rapport à la surface interne (30a) pour chaque élément supplémentaire (47, 48), reliant l'élément supplémentaire (47, 48) à une face latérale (38) du corps de support correspondant (3), et à agencer la référence (400) à ladite distance de référence (D2) spécifique par rapport à la surface interne (30a) dudit corps de support (3), un premier élément supplémentaire (48) étant fixé à une face latérale (38) d'un premier corps de support (3) et un second élément supplémentaire (47) à une face latérale (38) d'un corps de support (3) adjacent au premier corps de support (3) et faisant face à la face latérale (38) de l'autre corps de support (3) comprenant le premier élément supplémentaire (48), le second élément supplémentaire (47) comprenant un logement (47d) présentant un axe central (47c) et le premier élément supplémentaire (48) comprenant une saillie (48d) présentant un axe longitudinal (48c), et lesdits axes (47d, 48d) représentant la référence (400) qui est agencée à la distance de référence (D2) par rapport à la surface interne (30a) du corps de support correspondant (3), et les deux corps de support (3) étant reliés l'un à l'autre, les deux éléments supplémentaires (47, 48) coopérant l'un avec l'autre lorsqu'ils relient lesdits corps de support (3) l'un à l'autre, la saillie (48d) du premier élément supplémentaire (48) d'un corps de support (3) étant logée dans le logement (47d) dudit second élément supplémentaire (47) d'un corps de support adjacent (3), lorsqu'il relie lesdits corps de support (3) l'un à l'autre.
